# FASCICULE DE BREVET EUROPEEN

(11) **EP 0 990 791 B1**
(45) Date de publication et mention de la délivrance du brevet: **26.05.2004**
(21) Numéro de dépôt: 99440260.0
(22) Date de dépôt: 28.09.1999
(51) Int. Cl.: F02M 59/46, F02M 63/02, G05D 16/20

(54) **Electrovanne de régulation de pression**
Electromagnetisches Druckregelventil
Electromagnetic pressure regulating valve

(30) Priorité: 29.09.1998 FR 9812266
(43) Date de publication de la demande: 05.04.2000
(73) Titulaire: Eaton, 98000 Monaco (MC)
(72) Inventeur: Desaint, Gérard, 06500 Menton (FR); Magnaval, Jean-Louis, 06700 Saint Laurent du Var (FR)
(74) Mandataire: Littolff, Denis

(56) Documents cités:
- EP-A- 0 254 483
- EP-A- 0 267 162
- DE-A- 3 439 378
- DE-A- 19 606 318

## Description

La présente invention concerne une électrovanne de régulation de pression, notamment dotée d'un électro-aimant à solénoïde fixe entourant un noyau mobile axialement coopérant avec un poussoir coulissant. Ce poussoir est prévu pour actionner un clapet pouvant obturer un conduit d'amenée de fluide sous pression dans une chambre munie d'au moins un conduit d'évacuation dudit fluide. L'objectif de l'électrovanne est de réguler la pression du fluide localisé en amont dans le circuit hydraulique dans lequel elle est installée.

Elle est notamment destinée à équiper les systèmes d'injection de carburant pour véhicules automobiles, et plus particulièrement mais non exclusivement les moteurs diesel à injection directe. Bien que cette demière application convienne très naturellement aux spécificités techniques de l'électrovanne de l'invention, celle-ci peut cependant être utilisée dans bien d'autres exemples de circuits hydrauliques nécessitant un étage de régulation de pression.

Dans l'application préférentielle précitée, à laquelle on se référera tout au long de la description pour simplifier la compréhension de l'invention, la vanne régule la pression dans un rail commun aux différents injecteurs, ledit rail étant en réalité un accumulateur de carburant situé entre d'une part une pompe haute pression elle-même alimentée en carburant depuis le réservoir et d'autre part lesdits injecteurs.

Le circuit hydraulique se compose en fait d'une partie basse pression, comprenant ledit réservoir et une première pompe qui aspire directement le carburant du réservoir pour alimenter la pompe à haute pression, cette dernière faisant partie de la partie haute pression avec le rail commun et les injecteurs. L'ensemble est géré électroniquement par un calculateur qui s'appuie notamment sur les informations envoyées par un capteur de pression placé dans le rail, et permet notamment de déterminer l'ouverture et la fermeture des injecteurs.

Si la valeur de pression dans le rail est différente d'une valeur de consigne, ladite pression est régulée par l'électrovanne de l'invention, dont le ou les conduits d'évacuation sont reliés au réservoir de carburant. Le solénoïde de l'électrovanne agit sur un clapet de surdébit, dans une mesure qui est proportionnelle à l'intensité du courant, du moins pour la plus grande partie de la caractéristique d'évolution de la force en fonction de l'intensité. L'accroissement de courant dans la bobine élève ainsi généralement linéairement la pression de carburant dans le rail.

Les électrovannes actuellement utilisées dans de tels systèmes comportent en général un noyau plat auquel est fixé un poussoir agissant directement comme clapet par l'intermédiaire d'une bille ou non. Cette configuration présente plusieurs inconvénients, dont les plus importants apparaissent au moment du montage, car notamment en la présence d'une bille, celle-ci n'est tenue sur son siège que par l'extrémité du poussoir, ce qui peut poser des problèmes au moment des réglages initiaux à réaliser pendant l'opération d'assemblage durant lesquels on peut être amené à enlever ledit poussoir ou tout au moins à l'écarter de la bille. En tout état de cause, il faut alors trouver un moyen de maintenir cette dernière en position adéquate au niveau de son siège, ce qui n'est pas toujours aisé pendant le montage lors des déplacements du poussoir, et rend l'opération d'assemblage plus difficile, et donc plus longue et plus coûteuse.

Parmi les réglages initiaux, on peut citer l'établissement de l'entrefer entre le noyau mobile et la pièce polaire, qui nécessite un démontage de l'ensemble noyau mobile / poussoir qui peut affecter le réglage du clapet quelle que soit sa configuration.

Dans ce secteur technique, il est quasi unanimement considéré que le noyau mobile doit prendre une configuration plane, parce ce qu'on pense que cela permet d'aboutir à un rapport effort généré / encombrement nécessaire optimal. C'est pourquoi les électrovannes qui sont actuellement disponibles sur le marché présentent cette configuration à noyau mobile de révolution en forme d'assiette à laquelle est fixée un poussoir axial d'assez grande longueur.

L'invention, qui résout de manière simple le problème de l'assemblage du clapet notamment à bille, prend en outre le contrepied de cette dernière position. Elle offre de plus d'autres facilités de montage et dispose d'un limiteur de pression en cas de passage d'un courant de court-circuit dans la bobine.

Dans les domaines techniques dans lesquels les électrovannes ne présentent pas de noyaux plats, et sont configurés comme par exemple dans le document DE 34 39 378, rien n'est dit sur l'assemblage/montage, en particulier dans une version à bille. La conception n'est d'ailleurs pas prévue pour deux versions avec et sans bille, à l'inverse de celle de la présente invention.

Celle-ci concerne donc une électrovanne de régulation de pression munie d'un électro-aimant à solénoïde fixe entourant un noyau mobile axialement, coopérant avec un poussoir coulissant dans une pièce polaire coaxiale audit noyau, et actionnant un clapet pouvant obturer un conduit d'amenée de fluide sous pression dans une chambre munie d'au moins un conduit d'évacuation dudit fluide, ledit clapet étant disposé au débouché dudit conduit d'amenée dans ladite chambre, et régulant la pression de fluide en amont, ladite électrovanne étant caractérisée en ce que le clapet comporte une douille disposée à l'extrémité du poussoir distale du noyau mobile faisant partie d'un sous-ensemble hydraulique serti dans l'extrémité de la pièce polaire axialement opposée au noyau mobile, qui comprend également un manchon doté du ou des conduits d'évacuation, dans un alésage axial duquel sont disposés en vis-à-vis ladite douille et le siège du conduit d'amenée du fluide sous pression.

Ces éléments constituent le sous-ensemble hydraulique.

En fait, plus précisément, ladite douille est libre en translation, d'une part par rapport au poussoir, et d'autre part relativement au manchon comportant le ou les conduits d'évacuation.

Les opérations de réglage indispensables au cours de l'assemblage de la totalité de l'électrovanne se trouvent considérablement simplifiées par l'existence de ce sous-ensemble qui garantit notamment le maintien en position de la bille. Il n'est dès lors plus nécessaire de se préoccuper d'une part de la bille et d'empêcher qu'elle ne s'échappe suite à une mauvaise manipulation, et d'autre part plus généralement du positionnement relatif des éléments formant le clapet. Comme on le verra dans la suite, ce sous-ensemble hydraulique permet en plus de simplifier d'autres étapes de l'assemblage.

En réalité, dans la version à bille de l'électrovanne, la fonction principale de la douille précitée est de retenir la bille pendant l'assemblage, ce qui contribue à grandement améliorer le processus de fabrication des électrovannes. D'un point de vue strictement fonctionnel cependant, que la bille soit au contact d'une surface de la douille ou d'une extrémité du poussoir ne change strictement rien.

De préférence, le manchon à alésage axial du sous-ensemble hydraulique présente une symétrie de révolution, l'alésage étant pratiqué centralement selon l'axe de révolution, et le ou les conduits d'évacuation étant disposés radialement de manière à déboucher dans l'alésage central. De façon générale, il est d'ailleurs à constater que la plupart des pièces équipant la vanne, y compris la douille, présente une symétrie de révolution. A l'extrémité du poussoir opposée à celle qui est recouverte de la douille, ledit poussoir est serti dans un noyau mobile dont la longueur est au moins égale au diamètre, la longueur du poussoir hors du noyau additionnée de l'épaisseur de la paroi d'extrémité axiale de ladite douille exerçant une action de régulation de pression permettant de préserver un entrefer entre ledit noyau et la pièce polaire quelle que soit la pression exercée par la douille au niveau du conduit d'amenée du fluide sous pression. La configuration de l'invention permet avantageusement de procéder à un ajustement initial de cette longueur pour préserver le nécessaire entrefer magnétique, sans se préoccuper notamment du sort de la bille et plus généralement du réglage du clapet, ainsi qu'il sera expliqué plus en détail dans la suite.

Selon une possibilité, des moyens de rappel ajustables appliqués au noyau mobile permettent d'exercer une pression initiale de régulation lorsque le courant parcourant le solénoïde est voisin de zéro.

De préférence, ces moyens consistent en un ressort qui peut être précontraint à l'aide d'une vis.

La vis, axiale, étant accessible de l'extérieur de l'électrovanne, il est facile d'adapter la précontrainte en fonction de l'application dans laquelle l'électrovanne est utilisée.

De préférence encore, le noyau mobile comporte une gorge périphérique de saturation permettant de limiter la pression si le solénoïde est parcouru par un courant de court-circuit.

Cette caractéristique permet d'améliorer le fonctionnement de l'électrovanne de l'invention en offrant la maîtrise de la pression dans le rail commun même en cas de défaillance qui pourrait par exemple provoquer l'apparition d'un courant de court-circuit dans le solénoïde, entraînant la transmission d'une force trop importante par le poussoir et sa répercussion sur le clapet.

Il est clair qu'une telle gorge de saturation peut être pratiquée de manière beaucoup plus souple dans une configuration allongée de noyau mobile, et c'est pourquoi le choix d'une telle forme est un élément important de l'invention.

A des fins d'optimisation du fonctionnement de l'électrovanne, le noyau mobile et le poussoir sont guidés respectivement dans la culasse magnétique et dans la pièce polaire au moyen de bagues de guidage, du type teflonnées, formées de bandes planes enveloppant la périphérie de ces éléments.

Dans le clapet sans bille, la douille et le siège du conduit d'amenée du fluide sous pression sont dotés, dans l'alésage axial du manchon, d'épaulements se faisant face, sur lesquels reposent les deux extrémités d'un ressort visant à rappeler la douille en position d'ouverture dudit conduit.

Selon une configuration alternative, entre la douille et l'embouchure du conduit d'amenée de fluide sous pression, se situe une bille sur laquelle agit la douille disposée à l'extrémité du poussoir, cette bille pouvant obstruer ladite embouchure.

Mais l'invention ne conceme pas uniquement l'électrovanne proprement dite. Elle s'applique également à un procédé de montage, comme on l'a laissé entendre précédemment, de l'électrovanne, dont certaines des caractéristiques présentées ci-dessus sont d'ailleurs prévues essentiellement pour faciliter l'assemblage.

Ce procédé se caratérise par les étapes suivantes :
- assemblage du sous-ensemble hydraulique composé du siège du conduit d'amenée, éventuellement de la bille formant clapet, de la douille d'extrémité du poussoir, ces éléments étant disposés axialement dans l'alésage central du manchon dotée du ou des conduits d'évacuation ;
- fixation dudit sous-ensemble hydraulique à la pièce polaire ;
- emmanchement axial provisoire du poussoir dans le noyau mobile ;
- réglage par cale de l'entrefer entre le noyau mobile et la pièce polaire, entraînant un ajustement du degré d'insertion du poussoir dans le noyau mobile ;
- extraction avec ce positionnement relatif du sous-ensemble constitué du noyau mobile et du poussoir; extraction de la cale ;
- fixation axiale de ces éléments dans leur positionnement relatif ajusté par sertissage radial ;
- remontage du sous-ensemble précédent dans l'électrovanne.

Ainsi, le problème posé par la bille au montage, notamment dans les dispositifs de l'art antérieur, se trouve résolu par le sous-ensemble hydraulique et sa douille qui maintient, avec le siège, ladite bille dans son emplacement au coeur dudit sous-ensemble.

Il est alors possible de faire un montage provisoire du sous-ensemble mobile composé du noyau et du poussoir, pour établir à l'aide d'une cale le degré d'insertion du second dans le premier lorsque la bobine n'est pas parcourue par du courant.

Lorsqu'on procède à l'enlèvement de la cale, la bille, protégée par la douille, reste en place. Plus généralement, le clapet conserve sa configuration définitive. Le montage global de l'électrovanne s'en trouve grandement facilité, d'où une plus grande rapidité d'exécution aboutissant à un gain économique non négligeable.

L'invention va à présent être décrite plus en détail, en référence aux figures annexées pour lesquelles :
- la figure 1 est une vue en élévation de face d'une électrovanne à clapet à bille selon la présente invention ;
- la figure 2 est une vue en coupe longitudinale, suivant les flèches I de la figure précédente ; et
- la figure 3 est une vue en coupe longitudinale d'une configuration sans bille.

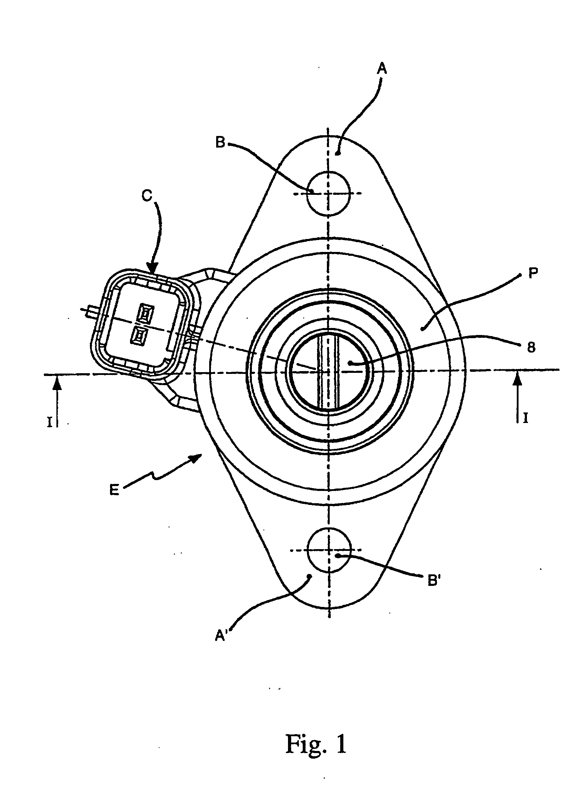

En figure 1, le corps principal d'allure cylindrique (P) de l'électrovanne (E) apparaît au centre, entouré de deux oreilles (A, A') de fixation et d'un connecteur (C) excentré. Les oreilles (A, A') sont elles-mêmes munies d'orifices (B, B') par exemple destinés à une fixation par vis sur un support prévu pour recevoir l'électrovanne (E).

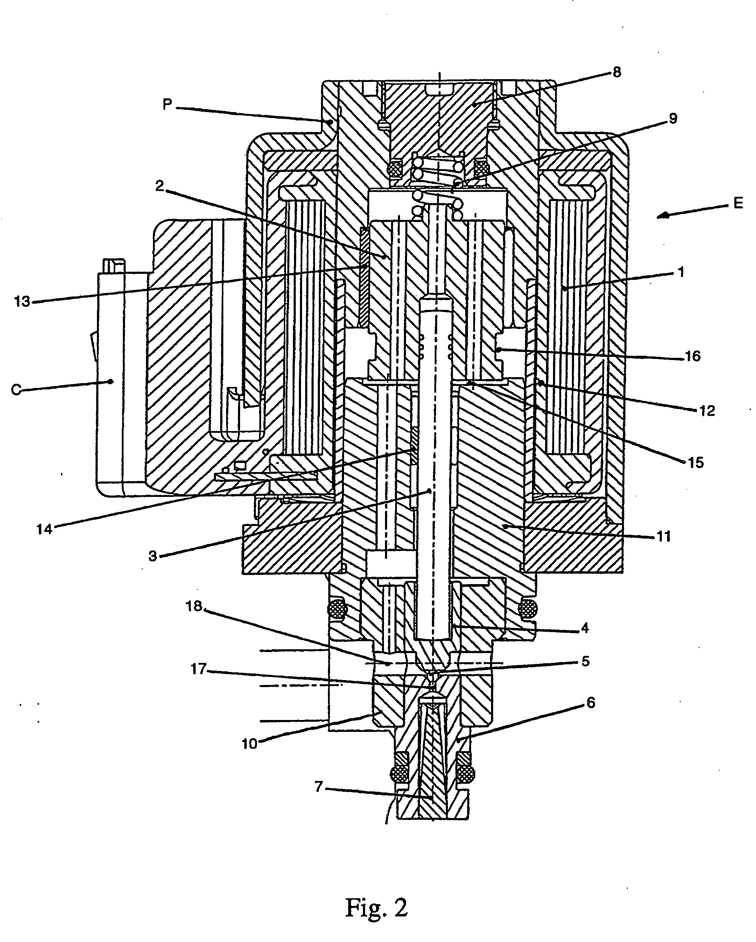

Au centre du corps cylindrique (P) se trouve la vis de précontrainte (8) apparaissant en haut de la figure 2, à laquelle il est à présent fait référence.

L'électrovanne (E) de l'invention se compose d'une manière générale d'un électro-aimant avec notamment une bobine ou solénoïde (1) fixe et un noyau mobile (2) auquel est attaché un poussoir (3) dont l'extrémité libre coopère avec un sous-ensemble hydraulique (4, 5, 6, 10) sur lequel on reviendra plus en détail dans la suite. L'électro-aimant exerce une action sur ledit poussoir (3), selon une caractéristique globalement linéaire, sauf à ses deux extrémités.

Dans le prolongement du noyau mobile (2) se trouve une pièce polaire (11) insérée dans une culasse magnétique (12) fixe supportant la bobine (1).

Lorsque le courant d'excitation de la bobine (1) est nul ou proche de zéro, des moyens de rappel, sous forme d'un ressort de compression (9), permettent au poussoir d'exercer une action sur une bille (5) formant clapet, par l'intermédiaire d'une douille (4) recouvrant l'extrémité libre du poussoir (3). Cette précontrainte, qui s'exerce donc même en l'absence de courant électrique dans la bobine, peut être réglée au moyen de la vis axiale (8) déjà mentionnée. En effet, le ressort (9) s'appuie sur une surface interne de cette vis (8), d'où un calibrage possible de la caractéristique pression / courant pour les électrovannes (E) produites en série, au moins dans sa portion proche du courant nul.

Le noyau mobile (2) et le poussoir (3), constituant avec la douille (4) l'équipage mobile de l'électrovanne (E) sont centrés et guidés par deux bagues (13, 14) de guidage, par exemple du type téflonnées. Le positionnement relatif des éléments constitutifs de l'équipage mobile, à savoir le noyau (2), le poussoir (3) et la douille (4) est tel qu'il subsiste un entrefer (15) entre ledit noyau (2) mobile et la pièce polaire (11). Cet entrefer radial (15) assure un fonctionnement proportionnel de l'électro-aimant. La caractéristique pression / courant, reflétant la caractéristique jumelle effort de poussée axial / courant, est linéaire dans une grande partie, à l'exception des extrémités. La raison de cette non linéarité a déjà été expliquée au voisinage de I = 0.

Pour les valeurs élevées, elle s'explique par l'existence d'une gorge (16) de saturation pratiquée dans le noyau mobile (2), qui permet comme son nom l'indique de saturer le circuit magnétique et d'infléchir par conséquent la courbe en une portion supérieure tendant à l'horizontalité. En cas de dysfonctionnement faisant apparaître un courant élevé, par exemple de court-circuit, dans la bobine (1), la force appliquée à la bille (5) est limitée du fait de l'existence de cette gorge périphérique (16).

Le procédé de l'invention, grâce à l'utilisation d'une cale, permet d'effectuer un positionnement relatif du noyau mobile (2) et du poussoir (3) qui est préservé au cours du fonctionnement normal de l'électrovanne (E).

Dans l'exemple préférentiel utilisé dans le cadre de cette description, la caractéristique pression / courant comporte un premier plateau à 200·10⁵ Pa, pour des valeurs du courant proches de 0, puis augmente linéairement jusqu'à au moins une valeur de 1600·10⁵ Pa, avant de s'infléchir vers l'horizontale. En d'autres termes, la pression de carburant minimale dans le rail commun est de 200·10⁵ Pa, et elle doit pouvoir monter à 1600·10⁵ Pa.

Le sous-ensemble hydraulique apparaît au bas de la figure 2, et comprend ladite douille (4), la bille (5) agissant comme vanne de surdébit, le siège de ladite bille (5), située au débouché d'un conduit (17) d'amenée du fluide sous pression, et une pièce principale (10) entourant ces demières. Cette pièce principale (10), de révolution, est fixée à la pièce polaire (11), et comporte des conduits d'évacuation (18).

En amont du conduit d'amenée (17), un filtre (7) axial laminaire préserve le sous-ensemble hydraulique (4, 5, 6, 10) d'éventuelles impuretés mélangées au fluide sous pression. Selon l'exemple suivi, le canal (17) et son filtre (7) sont directement reliés à l'accumulateur de carburant, à savoir en l'occurrence le rail commun du système d'injection, alors que les conduits (18) d'évacuation sont connectés au réservoir du véhicule.

La pièce (10) présente un alésage central dans le prolongement du poussoir (3), dans lequel sont insérés d'un côté la douille (4) et de l'autre le siège (6), la bille (5) étant logée dans un chanfrein au débouché du conduit (17), dans une chambre créée entre douille (4) et siège (6). Les conduits d'évacuation (18) sont pratiqués radialement dans la pièce (10), et ils débouchent dans l'alésage central au niveau de la bille (5).

La douille (4) est mobile en translation dans ledit alésage, et peut donc répercuter l'effort de l'électro-aimant à la bille (5), et par conséquent aider à maintenir une pression constante dans le rail, selon la consigne fournie par le calculateur.

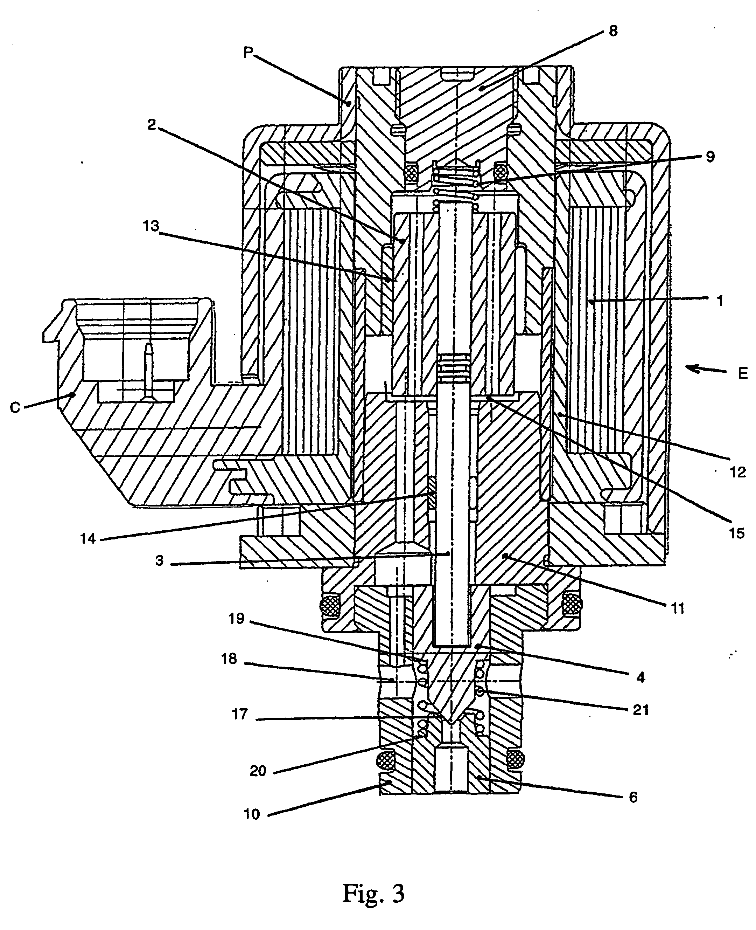

La configuration de la figure 3 est très proche de la précédente, avec un clapet dépourvu de bille. La forme de l'extrémité de la douille (4) est conique, de manière à s'adapter à l'embouchure chanfreinée du conduit (17) d'amenée du fluide. Ladite douille (4), ainsi que le siège (6), comportent un épaulement (19, 20) sur lequel s'appuient les extrémités respectives d'un ressort (21) dont la force de rappel a un effet opposé à celle qui est générée par le ressort (9), ainsi qu'à la force électromagnétique, puisqu'elle tend à écarter la douille (4) de l'embouchure du conduit (17).

Les formes des éléments (4, 6, 10) du sous-ensemble hydraulique sont un peu différentes de celles des éléments utilisés dans la version à bille, du fait de l'existence de ce ressort (21), de l'absence de bille (5), induisant une extrémité particulière à la fois pour le siège (6) et pour la douille (4), et de l'absence de filtre laminaire (7).

Le principe du sous-ensemble hydraulique est cependant similaire, avec un manchon périphérique (10) dans l'alésage central duquel se trouvent le siège (6) et la douille (4), la bille intermédiaire étant remplacée par le ressort (21) intermédiaire.

Il va sans dire que l'invention ne se limite pas aux formes décrites ci-dessus, qui n'ont été choisies qu'à titre d'exemple, non limitatif de l'invention. Elle englobe au contraire toutes les variantes de réalisation et d'application entrant dans le domaine de protection défini par les revendications annexées.

## Revendications

1. Electrovanne de régulation de pression dotée d'un électro-aimant à solénoïde fixe (1) entourant un noyau mobile (2) axialement, coopérant avec un poussoir (3) coulissant dans une pièce polaire (11) coaxiale audit noyau (2), et actionnant un clapet pouvant obturer un conduit d'amenée (17) de fluide sous pression dans une chambre munie d'au moins un conduit d'évacuation (18) dudit fluide, ledit clapet étant disposé au débouché dudit conduit d'amenée (17) dans ladite chambre, et régulant la pression de fluide en amont, les conduits (17, 18) étant inclus dans l'électrovanne, le clapet comportant une douille (4) disposée à l'extrémité du poussoir (3) distale du noyau mobile (2), **caractérisée en ce que** la douille fait partie d'un sous-ensemble hydraulique serti dans l'extrémité de la pièce polaire (11) axialement opposée au noyau mobile (2), qui comprend un manchon (10) doté du ou des conduits d'évacuation (18), dans un alésage axial duquel sont disposés en vis-à-vis ladite douille (4) et le siège (6) du conduit d'amenée (17) du fluide sous pression.

2. Electrovanne de régulation de pression selon la revendication précédente, **caractérisée en ce que** la douille (4) est libre en translation, d'une part par rapport au poussoir (3), et d'autre part dans le manchon (10) comportant le ou les conduits d'évacuation (18).

3. Electrovanne de régulation de pression selon la revendication précédente, **caractérisée en ce que** ledit manchon (10) à alésage axial présente une symétrie de révolution, l'alésage étant pratiqué centralement selon l'axe de révolution, et le ou les conduits d'évacuation (18) étant disposés radialement de manière à déboucher dans l'alésage central.

4. Electrovanne de régulation de pression selon l'une des revendications précédente, **caractérisée en ce que** le poussoir (3) est serti dans un noyau mobile (2) dont la longueur est au moins égale au diamètre, la longueur du poussoir (3) hors du noyau (2) additionnée de l'épaisseur de la paroi d'extrémité axiale de ladite douille (4) exerçant une action de régulation de pression permettant de préserver un entrefer (15) entre ledit noyau (2) et la pièce polaire (11) quelle que soit la pression exercée par la douille (4) au niveau du conduit d'amenée (17) du fluide sous pression.

5. Electrovanne de régulation de pression selon l'une quelconque des revendications précédentes, **caractérisée en ce que** des moyens de rappels ajustables (9) appliqués au noyau mobile (2) permettent d'exercer une pression initiale de régulation lorsque le courant parcourant le solénoïde (1) est voisin de zéro.

6. Electrovanne de régulation de pression selon la revendication précédente, **caractérisée en ce que** lesdits moyens de rappel ajustables consistent en un ressort (9) qui peut être précontraint à l'aide d'une vis (8).

7. Electrovanne de régulation de pression selon l'une quelconque des revendications précédentes, **caractérisée en ce que** le noyau mobile (2) comporte une gorge périphérique (16) de saturation permettant de limiter la pression si le solénoïde (1) est parcouru par un courant de court-circuit.

8. Electrovanne de régulation de pression selon l'une quelconque des revendications précédentes, **caractérisée en ce que** le noyau mobile (2) et le poussoir (3) sont guidés respectivement dans la culasse magnétique et la pièce polaire (11) au moyen de bagues (13, 14), du type teflonnées, formées de bandes planes enveloppant leur périphérie.

9. Electrovanne de régulation de pression selon l'une quelconque des revendications précédentes, **caractérisée en ce que** la douille (4) et le siège (6) du conduit d'amenée (17) du fluide sous pression sont dotés, dans l'alésage axial du manchon (10), d'épaulements (19, 20) se faisant face, sur lesquels reposent les deux extrémités d'un ressort (21) visant à rappeler la douille (4) en position d'ouverture dudit conduit (17).

10. Electrovanne de régulation de pression selon l'une quelconque des revendications 1 à 8, **caractérisée en ce que** entre la douille (4) et l'embouchure du conduit d'amenée (17) de fluide sous pression, se situe une bille (5) sur laquelle agit la douille (4) disposée à l'extrémité du poussoir (3), cette bille (5) pouvant obstruer ladite embouchure.

11. Procédé de montage d'une électrovanne de régulation de pression selon les revendications précédentes, **caractérisé en ce qu'**il se compose des étapes successives suivantes :
- assemblage du sous-ensemble hydraulique composé du siège (6) du conduit d'amenée (17), éventuellement de la bille (5) formant clapet, de la douille (4) d'extrémité du poussoir (3), ces éléments étant disposés axialement dans l'alésage central de la pièce (10) dotée du ou des conduits d'évacuation (18) ;
- fixation dudit sous-ensemble hydraulique (4, 5, 6, 10) à la pièce polaire (11) ;
- emmanchement axial provisoire du poussoir (3) dans le noyau mobile (2) ;
- réglage par cale de l'entrefer (15) entre le noyau mobile (2) et la pièce polaire (11), entraînant un ajustement du degré d'insertion du poussoir (3) dans le noyau mobile (2) ;
- extraction avec ce positionnement relatif du sous-ensemble constitué du noyau mobile (2) et du poussoir (3) ; extraction de la cale ;
- fixation axiale de ces éléments dans leur positionnement relatif ajusté par sertissage radial ;
- remontage du sous-ensemble précédent dans l'électrovanne.

## Patentansprüche

1. Elektrisches (elektromagnetisches) Druckregelventil mit einem Elektromagneten mit feststehendem Solenoid (1), welches einen axial beweglichen Magnetkern ( 2 ) umgibt, der mit einem Stößel ( 3 ) zusammenwirkt , der in einem zu dem Magnetkern ( 2 ) koaxialen Polschuh ( 11 ) gleitend verschieblich ist und eine Ventilklappe betätigt, welche eine Zufuhrleitung ( 17 ) für die Zufuhr eines druckbeaufschlagten Strömungsmittels in eine Kammer verschließen kann, die mit wenigstens einer Abflußleitung ( 18 ) für dieses Strömungsmittel versehen ist, wobei die genannte Ventilklappe in der Mündung der genannten Zufuhrleitung ( 17 ) in die Kammer angeordnet ist und den stromaufwärtigen Strömungsmitteldruck regelt, und wobei die Leitungen ( 17, 18 ) in dem Elektromagnetventil einbezogen sind und die Ventilklappe eine an dem von dem beweglichen Magnetkern ( 2 ) entfernten Ende des Stößels ( 3 ) angeordnete Buchse bzw. Hülse ( 4 ) umfaßt, ***dadurch gekennzeichnet*, daß** die Hülse bzw. Buchse Teil eines in das zum beweglichen Magnetkern ( 2 ) entgegengesetzte Ende des Polschuhs ( 11 ) eingesetzen Hydraulik- Subaggregats ist, das eine mit der bzw. den Abflußleitung(en) ( 18 ) versehene Manschette ( 10 ) umfaßt, wobei in einer Bohrung bzw. Ausnehmung der Manschette einander gegenüber liegend die genannte Hülse bzw. Buchse ( 4 ) und der Sitz ( 6 ) der Zuflußleitung ( 17 ) für das druckbeaufschlagte Strömungsmittel angeordnet sind.

2. Elektromagnetisches Druckregelventil nach Anspruch 1, **dadurch gekennzeichnet, daß** die Hülse bzw. Buchse ( 4 ) translatorisch frei relativ bezüglich einerseits dem Stößel ( 3 ) und andererseits bezüglich der die Abflußleitung(en) ( 18 ) aufweisenden Manschette ( 10 ) ist.

3. Elektromagnetisches Druckregelventil nach dem vorhergehenden Anspruch, **dadurch gekennzeichnet, daß** die genannte Manschette ( 10 ) mit Bohrung bzw. Ausnehmung eine Rotationssymmetrie besitzt, wobei die Bohrung bzw. Ausnehmung zentrisch bezüglich der Rotationsachse ist und die Abflußleitung(en) radial so angeordnet ist/ sind, daß sie in der zentralen Bohrung bzw. Ausnehmung mündet bzw. münden.

4. Elektromagnetisches Druckregelventil nach einem der vorhergehenden Ansprüche, **dadurch gekennzeichnet, daß** der Stößel ( 3 ) in einen beweglichen Magnetkern ( 2 ) eingesetzt ist, dessen Länge wenigstens gleich dem Durchmesser ist, daß die Länge des Srößels ( 3 ) außerhalb des Kerns zuzüglich der Dicke der eine Druckregelwirkung ausübenden axialen Stirnwandung der genannten Buchse bzw. Hülse ( 4 ) die Erhaltung eines Spalts ( 15 ) zwischen dem Magnetkern ( 2 ) und dem Polschuh ( 11 ) gestattet, unabhängig von dem durch die Buchse bzw. Hülse ( 4 ) auf dem Niveau der Zuflußleitung ( 17 ) für das druckbeaufschlagte Strömunsmittel ausgeübten Druck.

5. Elektromagnetisches Druckregelventil nach einem der vorhergehenden Ansprüche, **dadurch gekennzeichnet, daß** einstellbare Rückstellmittel ( 9 ) für den beweglichen Magnetkern ( 2 ) die Ausübung eines Anfangsregeldrucks gestatten, wenn der durch das Solenoid fließende Strom benachbart Null ist.

6. Elektromagnetisches Druckregelventil nach dem vorhergehenden Anspruch, **dadurch gekennzeichnet, daß** die genannten einstellbaren Rückstellmittel aus einer Feder ( 9 ) bestehen, die mithilfe einer Schraube ( 8 ) vorgespannt werden kann.

7. Elektromagnetisches Druckregelventil nach einem der vorhergehenden Ansprüche, **dadurch gekennzeichnet, daß** der bewegliche Magnetkern ( 2 ) eine Sättigungs-Umfangseinschnürung ( 16 ) aufweist, welche eine Begrenzung des Drucks gestattet, wenn das Solenoid von einem Kurzschlußstrom durchflossen wird.

8. Elektromagnetisches Druckregelventil nach einem der vorhergehenden Ansprüche, **dadurch gekennzeichnet, daß** der bewegliche Kern ( 2 ) und der Stößel ( 3 ) in dem Magnetjoch bzw. dem Polschuh ( 11 ) mittels Teflonringen ( 13, 14 ) geführt sind, die aus ihren Umfang umgebenden Flachbändern gebildet sind.

9. Elektromagnetisches Druckregelventil nach einem der vorhergehenden Ansprüche, **dadurch gekennzeichnet, daß** die Buchse bzw. Hülse ( 4 ) und der Sitz ( 6 ) der Zuflußleitung ( 17 ) für das druckbeaufschlagte Strömungsmittel in der Axialbohrung bzw. - ausnehmung der Manschette ( 10 ) mit einander zugewandten Schultern ( 19, 20 ) ausgebildet sind, auf welchen die beiden Enden einer zur Rückholung der Buchse bzw. Hülse ( 4 ) in die Öffnungsstellung der genannten Leitung ( 17 ) vorgesehenen Feder ( 21 ) aufruhen.

10. Elektromagnetisches Druckregelventil nach einem der Ansprüche 1 bis 8, **dadurch gekennzeichnet, daß** zwischen der Buchse bzw. Hülse ( 4 ) und der Mündung der Zuflußleitung ( 17 ) für das druckbeaufschlagte Strömungsmittel eine Kugel ( 5 ) zwischengelagert ist, auf welche die am Ende des Stößels ( 3 ) angeordnete Buchse bzw. Hülse ( 4 ) einwirkt, wobei die genannte Kugel ( 5 ) die genannte Mündung verschließen kann.

11. Montageverfahren für ein elektromagnetisches Druckregelventil nach den vorhergehenden Ansprüchen, **dadurch gekennzeichnet, daß** das Verfahren die folgenden Schritte bzw. Stufen umfaßt:
- Zusammenbauen des aus dem Sitz ( 6 ) der Zuflußleitung ( 17 ), gegebenenfalls der die Ventilklappe bildenden Kugel ( 5 ) und der Buchse bzw. Hülse ( 4 ) am Ende des Stößels ( 3 ) zusammengesetzten Hydraulik-Subaggregats, wobei diese Elemente axial in der Mittelbohrung bzw. -ausnehmung des mit der bzw. den Abflußleitung(en) ( 18 ) versehenen Teils angeordnet werden;
- Befestigen des genannten Hydraulik-Subaggregats ( 4, 5, 6, 10 ) an dem Polschuh ( 11);
- provisorisches Einstecken des Stößels ( 3 ) in den beweglichen Magnetkern ( 2);
- Einstellen des Spalts ( 15 ) zwischen dem beweglichen Kern ( 2 ) und dem Polschuh ( 11 ) mittels Keil;
- Herausnehmen des aus dem beweglichen Kern ( 2 ) und dem Stößel ( 3 ) bestehenden Subaggregats mit dieser relativen Positionierung; Herausnehmen des Keils;
- axiale Fixierung dieser Elemente in ihrer justierten Relativstellung durch Radialpressen bzw. -quetschen;
- Wiederzusammensetzen des vorstehenden Subaggregats in das Elektromagnetventil.

## Claims

1. Electromagnetic pressure regulating valve equipped with a fixed solenoid (1) electromagnet surrounding an axially mobile core (2), interacting with a sliding plunger (3) in a pole piece (11) coaxial with the said core (2) and actuating a valve shutter that can block off an inlet duct (17) carrying fluid under pressure into a chamber furnished with at least one outlet duct (18) discharging the said fluid, the said valve shutter being disposed at the opening of the said inlet duct (17) into the said chamber, and regulating the fluid pressure upstream, the ducts (17, 18) being included in the electromagnetic valve, the valve shutter comprising a socket piece (4) disposed at that end of the plunger (3), that is distant from the mobile core (2), **characterized in that** the socket piece forms part of a hydraulic subassembly set into the end of the pole piece (11) axially opposed to the mobile core (2), which comprises a sleeve (10) equipped with the outlet duct or ducts (18), in one axial bore of which are placed opposite each other the said socket piece (4) and the seat (6) of the inlet duct (17) carrying the fluid under pressure.

2. Electromagnetic pressure regulating valve according to the preceding claim, **characterized in that** the socket piece (4) is free in translation, on the one hand relative to the plunger (3) and on the other hand in the sleeve (10) comprising the outlet duct or ducts (18).

3. Electromagnetic pressure regulating valve according to the preceding claim, **characterized in that** the said sleeve (10) with axial bore has symmetry of revolution, the bore being made centrally along the axis of revolution, and the outlet duct or ducts (18) being disposed radially to open into the central bore.

4. Electromagnetic pressure regulating valve according to one of the preceding claims, **characterized in that** the plunger (3) is set into a mobile core (2) whose length is at least equal to its diameter, the length of the plunger (3) outside the core (2) plus the thickness of the axial end wall of the said socket piece (4) exerting an action of pressure regulation to preserve an air gap (15) between the said core (2) and the pole piece (11) irrespective of the pressure exerted by the socket piece (4) on the inlet duct (17) carrying the fluid under pressure.

5. Electromagnetic pressure regulating valve according to any one of the preceding claims, **characterized in that** adjustable return means (9) applied to the mobile core (2) enable an initial regulation pressure to be exerted when the current flowing through the solenoid (1) is close to zero.

6. Electromagnetic pressure regulating valve according to the preceding claim, **characterized in that** the said adjustable return means consist in a spring (9) which may be preloaded with the aid of a screw (8).

7. Electromagnetic pressure regulating valve according to any one of the preceding claims, **characterized in that** the mobile core (2) comprises a peripheral saturation groove (16) to limit the pressure if a short circuit current passes through the solenoid (1).

8. Electromagnetic pressure regulating valve according to any one of the preceding claims, **characterized in that** the mobile core (2) and the plunger (3) are guided respectively in the magnetic yoke and the pole piece (11) by means of Teflon-coated rings (13, 14) formed of flat bands enveloping their periphery.

9. Electromagnetic pressure regulating valve according to any one of the preceding claims, **characterized in that** the socket piece (4) and the seat (6) of the inlet duct (17) carrying the fluid under pressure have, in the axial bore of the sleeve (10), shoulders (19, 20) facing one another, on which rest the two ends of a spring (21) designed to return the socket piece (4) to a position in which the said duct (17) is open.

10. Electromagnetic pressure regulating valve according to any one of claims 1 to 8, **characterized in that** between the socket piece (4) and the opening of the inlet duct (17) carrying the fluid under pressure, there is a ball (5) upon which the socket piece (4) placed at the end of the plunger (3) acts, this ball (5) being capable of blocking the said opening.

11. Method of assembling an electromagnetic pressure regulating valve according to the preceding claims, **characterized in that** it comprises the following successive steps:
- assembly of the hydraulic subassembly comprising the seat (6) of the inlet duct (17), where appropriate the ball (5) forming the valve shutter, and the socket piece (4) at the end of the plunger (3), these elements being disposed axially in the central bore of the part (10) fitted with the outlet duct or ducts (18);
- fixing of the said hydraulic subassembly (4, 5, 6, 10) to the pole piece (11);
- provisional axial fitting of the plunger (3) into the mobile core (2);
- adjustment by shim of the air gap (15) between the mobile core (2) and the pole piece (11), giving rise to an adjustment of the degree of insertion of the plunger (3) into the mobile core (2);
- extraction with this relative positioning of the subassembly consisting of the mobile core (2) and of the plunger (3); extraction of the shim;
- axial fixing of these elements in their adjusted relative positioning by radial crimping;
- remounting of the preceding subassembly in the electromagnetic valve.
